(19)

**Europäisches Patentamt**
**European Patent Office**
**Office européen des brevets**

(11) **EP 1 260 695 B1**

(12) **EUROPEAN PATENT SPECIFICATION**

(45) Date of publication and mention
of the grant of the patent:
**10.03.2010 Bulletin 2010/10**

(51) Int Cl.:
*F02D 41/34* (2006.01)  *F02D 41/04* (2006.01)
*F02D 41/10* (2006.01)  *F02M 69/04* (2006.01)

(21) Application number: **02007658.4**

(22) Date of filing: **04.04.2002**

(54) **Fuel injection control system for engine**

Brennstoffeinspritzsteuerungssystem für eine Brennkraftmaschine

Système de commande d'injection de carburant pour un moteur à combustion interne

(84) Designated Contracting States:
**DE GB IT**

(30) Priority: **21.05.2001 JP 2001151070**

(43) Date of publication of application:
**27.11.2002 Bulletin 2002/48**

(73) Proprietor: **HONDA GIKEN KOGYO KABUSHIKI KAISHA**
**Minato-ku, Tokyo (JP)**

(72) Inventors:
• **Machida, Kenichi,**
**c/o Kabushiki Kaisha Honda Gijutsu Kenkyusho**
**Wako-shi,**
**Saitama (JP)**
• **Hirakata, Yoshiaki,**
**c/o Kabushiki Kaisha Honda Gijutsu Kenkyusho**
**Wako-shi,**
**Saitama (JP)**
• **Takeda, Toru,**
**c/o Kabushiki Kaisha Honda Gijutsu Kenkyusho**
**Wako-shi,**
**Saitama (JP)**

(74) Representative: **Prechtel, Jörg et al**
**Weickmann & Weickmann**
**Patentanwälte**
**Postfach 86 08 20**
**81635 München (DE)**

(56) References cited:
EP-A- 0 676 539  US-A- 4 424 785
US-A- 5 404 856  US-A- 5 584 277
US-A- 5 642 722  US-A- 5 762 054
US-A- 5 819 714

• **PATENT ABSTRACTS OF JAPAN vol. 012, no. 404 (M-757), 26 October 1988 (1988-10-26) & JP 63 147953 A (HONDA MOTOR CO LTD), 20 June 1988 (1988-06-20)**
• **PATENT ABSTRACTS OF JAPAN vol. 1996, no. 01, 31 January 1996 (1996-01-31) & JP 07 247892 A (HONDA MOTOR CO LTD), 26 September 1995 (1995-09-26)**

**Description**

The present invention relates to a fuel injection control system for an engine, and particularly to a fuel injection control system for an engine, which is capable of estimating part of a fuel injected from a fuel injection valve, which part is not directly supplied to a cylinder because of adhesion on an inner wall of an intake pipe or the like, thereby realizing suitable fuel injection on the basis of the estimated result.

Control systems for engines of a type in which fuel injection valves are disposed in the upstream and the downstream of a throttle valve have been known. For example, a control system described in Japanese Patent Laid-open No. Hei 6-102999 is configured such that a fuel is injected, in an idle rotation region, only from a downstream side fuel injection valve, and a fuel is injected, in a region other than the idle rotation region, from an upstream side fuel injection valve in accordance with an engine state. In this control unit, when the idle rotation region is shifted to a region other than the idle rotation region, a fuel amount injected from the downstream side injection valve is gradually reduced to a target value; and the fuel amount injected from the downstream side injection amount is determined in consideration of part of a fuel injected from the upstream side injection valve, which part adheres on a wall surface of an intake pipe.

Fuel injection control systems for engines of a type having a single fuel injection valve, in which a fuel injection amount is corrected in consideration of a fuel adhering on an inner wall of an intake pipe, have been proposed, for example, in Japanese Patent Laid-open Nos. Hei 7-247892 and Hei 5-340285. In particular, in the control system in the latter document discloses a control of repeated fuel injection (divided injection) twice in one cycle.

According to the control system described in the above document, Japanese Patent Laid-open No. Hei 6-102999, although adhesion of a fuel on the wall surface in the upstream of the throttle valve is taken into account, it fails to examine an amount of the fuel adhering on the wall surface. Accordingly, it is insufficient to realize a high accurate control so as to meet a target air-fuel ratio, with a result that it is difficult to improve drivability (running performance) in combination of improvement of fuel consumption. Another problem of this control system is that since the number of setting parameters becomes larger to improve responsiveness to a change in engine state or a change in throttle opening angle, the control of fuel injection becomes laborious.

On the other hand, the fuel injection control system for an engine including a single fuel injection valve estimates a fuel adhesion amount; however, the control system is specified for an engine including a single fuel injection valve, and does not examine application to an engine including fuel injection valves disposed in the upstream and downstream of the throttle valve, and more specifically, does not examine application to a complex control system for estimating a fuel adhesion amount in each of the upstream and downstream of the throttle valve in the engine including the fuel injection valves disposed in the upstream and downstream of the throttle valve.

As described in the above document, Japanese Patent Laid-open No. Hei 6-102999, calculation of a fuel injection amount is generally performed at each predetermined crank angle (at each crank angle of 180° in the control system of this document), and a fuel is injected from each fuel injection valve one per one cycle (crank angle: 720° ). Accordingly, if an engine state is changed until fuel injection after calculation of a fuel injection amount is calculated, the fuel injection amount once determined cannot be changed. As a result, in an acceleration state in which the engine state is largely changed, a fuel supplied amount may be lacked, to degrade drivability. In particular, if a throttle opening angle is largely changed, it is unclear to what degree a fuel injected from an upstream injection valve flows in the downstream of the throttle valve, with a result that over-rich or over-lean is liable to occur.

JP 63 147953 A and US-A-4 424 785 (on which the preamble of claim 1 is based) both show fuel systems with two injectors, one being upstream of a throttle, and one downstream, but without discussing how to calculate a fuel amount adhered to the inner wall of the intake system.

In JP 07 247892, EP 0 676 543 A2, US 5 404 856, US 576 054, US 5 584 277, US 5 819 714 and US 5 642 722 only one fuel injection valve is shown downstream of the throttle valve.

In JP 63 147953 A, US-A-4 424 785 and JP 07 247892 A, a lack of the fuel amount determined in accordance with the operating condition of the engine.

In EP-A-0 676 539, US-A-5 404 856, US-A-5 762 054, US-A-5 584 277, US-A-5 819 714 and US-A-5 642 722, a lack of the fuel amount is calculated and feed back to a parameter of the fuel amount, so that the injection valve injects only one time during 1 cycle (720°).

In JP 07 247892 A and EP 0 676 539, the second injection ToutS is done during the first suction stroke, but this second injection amount ToutS is calculated without subtracting step in no disclosure when ToutS is calculated during the crank cycle, and without considering the amount of the deposited fuel which is already released from the wall of the intake pipe.

To solve the above-described problems, the present invention has been made, and an object of the present invention is to provide a fuel injection control system for an engine, which is capable of highly accurately determining a fuel supplied amount in response to a current engine state on the basis of a fuel flow-in state from the upstream of a throttle valve.

According to the present invention, there is provided a fuel injection control system for an engine, in accordance with claim 1.

The control system comprises first means for calculating a required fuel amount at a predetermined calculation cycle, and calculating first fuel amounts to be injected from the upstream and downstream fuel injection valves on the basis of the required fuel amount; and second means for calculating, after injection of fuels from the fuel injection valves on the basis of the calculated first fuel injection amounts, a lack of the fuel injection amount immediately before re-calculation of a required fuel amount at the calculation cycle coming until the end of an intake stroke by subtracting the fuel injection amount from the re-calculated required fuel amount; wherein the lack of the fuel injection amounts is additionally injected during the intake stroke; and the lack of the fuel injection amount is calculated by addition/subtraction of a fuel injected from the fuel injection valve and deposited on an inner wall of an intake pipe, and a fuel released from the deposited fuel to flow in a cylinder.

With this feature, the lack of the fuel injection amount can be accurately detected by calculating part of a fuel injected from the fuel injection valve, which part directly flows in the cylinder, and part of the fuel injected from the fuel injection valve, which part has been deposited on the inner wall of the intake pipe and is released therefrom to indirectly flow in the cylinder, and the additional fuel can be certainly supplied to the engine.

The first means for calculating a required fuel amount at the predetermined calculation cycle calculates fuel amounts to be injected from the upstream injection valve and the downstream injection valve on the basis of the required fuel amount. The second means for calculating a lack of the fuel injection amounts calculates, after injection of fuels from the upstream injection valve and the downstream injection valve on the basis of the calculated fuel injection amounts, a lack of the fuel injection amounts immediately before re-calculation of the required fuel amount at the calculation cycle coming until the end of an intake stroke by subtracting the fuel injection amounts from the re-calculated required fuel amount. The lack of the fuel injection amounts is injected from the downstream injection valve during the intake stroke.

With the feature, after a fuel based on a required fuel amount calculated at a predetermined cycle is injected, a lack of the previous fuel injection can be calculated and additionally injected until the end of the intake stroke.

The second means for calculating the lack of the fuel injection amounts includes: third calculating means for adding first part of the fuel injected from the upstream injection valve, which first part flows in the downstream of the throttle valve, second part of the fuel injected from the upstream injection valve, which second part has been deposited on the inner wall of the intake pipe in the upstream of the throttle valve and is released therefrom to flow tin the downstream of the throttle valve, and a fuel injected from the downstream injection valve, and subtracting a fuel adhering on the inner wall of the intake pipe in the downstream of the throttle valve from the added fuel amount; and fourth calculating means for adding the fuel amount calculated by the third calculating means, and part of the fuel deposited on the inner wall of the intake pipe in the downstream of the throttle valve, which part flows on the engine side; wherein a difference obtained by subtracting the fuel amount calculated by the fourth calculating means from the required fuel amount is taken as the lack of the fuel injection amounts.

With these features, the lack of the fuel injection amounts can be accurately detected by estimating the amount of a fuel supplied not directly but indirectly from each fuel injection valve to the engine in accordance with the predetermined adhesion ratio and the predetermined release ratio.

As is apparent from the above description, according to the invention described in claim 1, after fuel injection, additional injection can be performed in such a manner as to meet a required fuel amount re-calculated at a calculation cycle before the end of an intake stroke. In particular, a lack of the fuel can be calculated by estimating a fuel adhering on an inner wall of an intake pipe and a fuel released therefrom to flow in a cylinder. Accordingly, even in a transient state in which an engine state is rapidly changed, fuel supply based on the required fuel amount can be performed, with a result that it is possible to improve drivability. Further, although a fuel supply amount tends to be set on the rich side in order to avoid degradation of drivability due to over-lean, according to the present invention, it is not required to be set on the rich side, so that it is possible to improve fuel consumption.

Fig. 1 is a block diagram showing functions of essential portions of a fuel injection control system according to one embodiment of the present invention.

Fig. 2 is a view showing a configuration of an essential portion of an engine including the fuel injection control system of the present invention.

FIG. 3 is a schematic view of a throttle body showing a dynamic model of a fuel injected in an intake passage.

FIG. 4 is a block diagram illustrating the dynamic mode in the vicinity of a throttle valve.

FIG. 5 is a block diagram showing a calculation function for calculating full injection amounts by injection valves.

FIG. 6 is a table in which a relationship between a fuel injection amount ratio KTin(Upper) and an upstream injection amount Tin(Upper) is set.

FIG. 7 is a flow chart (Part 1) showing a process of fuel injection control.

FIG. 8 is a flow chart (Part 2) showing the process of fuel injection control.

FIG. 9 is a block diagram showing functions of essential portions, for calculating an additional fuel amount, of the fuel injection control system according to the embodiment of the present invention.

FIG. 10 is a timing chart showing calculated fuel injection times and fuel injection timings.

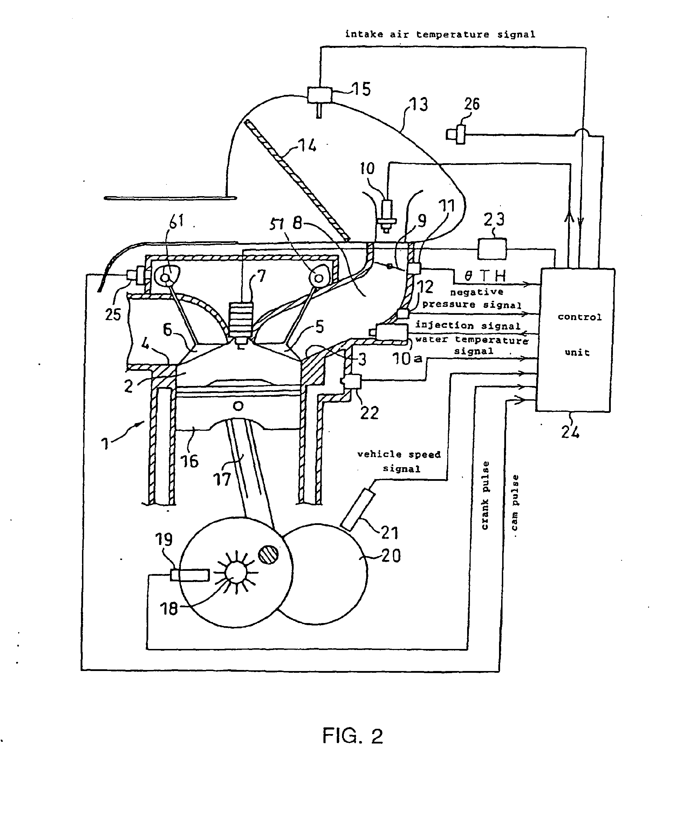

Hereinafter, the present invention will be described with reference to the drawings. FIG. 2 is a view showing a configuration of an essential portion of an engine in which a fuel injection control system according to one embodiment of the present invention is assembled. Referring to FIG. 2, an intake port 3 and an exhaust port 4 are opened in a combustion chamber 2 of a cylinder 1. An intake valve 5 is provided for the intake port 3 and an exhaust valve 6 is provided for the exhaust port 4. An ignition plug 7 is provided for the combustion chamber 2. An ignition coil 23 is connected to the ignition plug 7.

An intake passage 8 communicated to the intake port 3 is provided with a throttle valve 9 for adjusting an intake air amount on the basis of a throttle opening angle θTH, a fuel injection valve (hereinafter, referred to as "upstream injection valve") 10 provided on the upstream side from the throttle valve 9, a fuel injection valve (hereinafter, referred to as "downstream injection valve") 10a provided on the downstream side from the throttle valve 9, a throttle sensor 11 for detecting the throttle opening angle θTH, and a negative pressure sensor 12. An air cleaner 13 is provided at a terminal of the intake passage 8 and an air filter 14 is provided in the air cleaner 13. Outside air is sucked in the intake passage 8 through the air filter 14. An intake air temperature sensor 15 is provided in the air cleaner 13.

A piston 16 is provided in the cylinder 1, and a crankshaft 18 is connected to the piston 16 via a connecting rod 17. A crank angle sensor 19 for detecting a rotational angle of the crankshaft 18 and outputting a crank pulse for each specific crank angle is disposed in such a manner as to face to the crankshaft 18. A vehicle speed sensor 21 is disposed in such a manner as to face to a rotating body 20 such as a gear which is connected to the crankshaft 18 and rotated together therewith.

Cams 51 and 61 are provided for opening/closing the intake valve 5 and the exhaust valve 6, respectively. The cams 51 and 61 are rotated along with rotation transmitted from the crankshaft 18 via a gear train (not shown). A cam angle sensor 25 for detecting a rotational angle position is provided in such a manner as to face to the cam 61.

A water temperature sensor 22 for detecting a cooling water temperature representative of an engine temperature is provided on a water jacket formed around the cylinder 1. An atmospheric pressure sensor 26 is provided at a suitable position.

A control unit 24, which is a micro-computer composed of a CPU or a memory, includes input/output ports, and an interface such as an A/D converter. A power for operating the control unit 24 is supplied from a battery (not shown) to the control unit 24. An output of each of the above-described sensors is inputted in the control unit 24 through the input port. On the basis of results of processing input signals supplied from the sensors, the control unit 24 outputs drive signals to the upstream and downstream injection valves 10 and 10a and the ignition plug 7. A drive signal (injection signal) outputted to each of the upstream and downstream injection valves 10 and 10a is a pulse signal having a pulse width corresponding to an injection amount. Each of the upstream and downstream injection valves 10 and 10a is opened for a time corresponding to the pulse width of the pulse signal, to inject a fuel in the intake passage 8.

With respect to the fuel injected from each of the upstream and downstream injection valves 10 and 10a, all of the fuel is not directly supplied to the combustion chamber 2, but part of the fuel once adheres on an inner wall of the intake passage 8 and is then supplied to the combustion chamber 2 therefrom. In some cases, the fuel, which has been injected from the upstream injection valve 10 and has adhered on a portion, in the upstream of the throttle valve 9, of the inner wall of the intake passage 8, adheres on a portion, in the downstream of the throttle valve 9, of the inner wall of the intake passage 8 together with part of the fuel injected from the downstream injection valve 10a, to be then supplied to the combustion chamber 2.

According to this embodiment, a wall surface fuel adhesion amount in the downstream of the throttle valve 9 and a wall surface fuel adhesion amount in the upstream of the throttle valve 9 are estimated, and respective fuel amounts to be injected from the upstream and downstream injection valves 10 and 10a are calculated in consideration of the estimated wall surface fuel adhesion amounts. To be more specific, the fuel amounts to be injected from the upstream and downstream injection valves 10 and 10a are calculated by using adhesion ratios and release ratios. The adhesion ratios are used for estimating the wall surface fuel adhesion amounts in the upstream and downstream of the throttle valve 9. The release ratios are each determined as a ratio of a fuel released from a deposited fuel having adhered on the wall surface and flowing therefrom in the downstream to the deposited fuel having adhered on the wall surface. Each of these adhesion ratios and release ratios is a function of an engine state, that is, a function of the throttle opening angle θTH and an engine speed Ne, and is previously set by calculation based on experimental results.

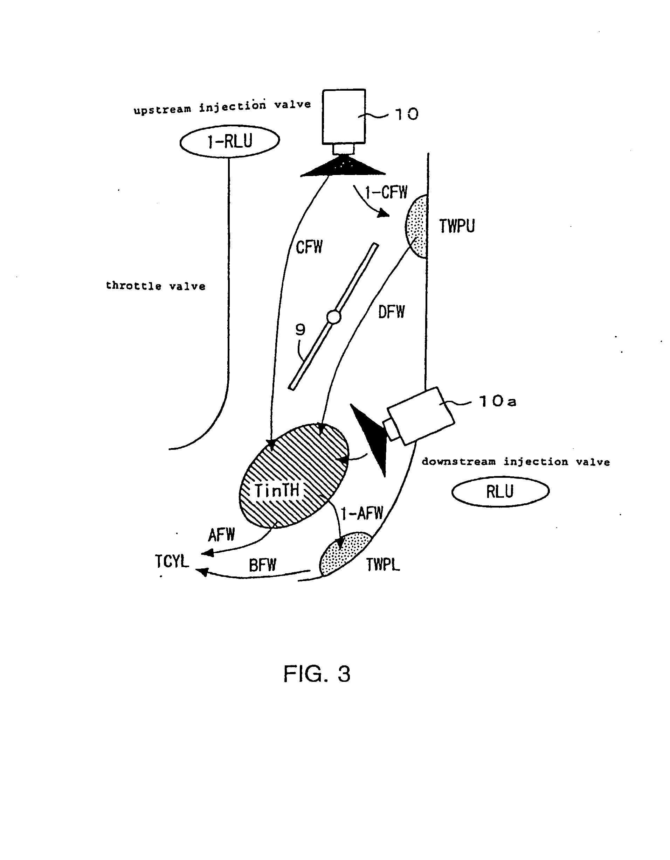

FIG. 3 is a schematic view of the throttle valve 9 and its neighborhood, that is, a throttle body, illustrating a dynamic mode of a fuel injected in the intake passage 8. Referring to FIG. 3, a fuel amount supplied from each of the upstream and downstream injection valves 10 and 10a is controlled in such a manner that a fuel amount "TCYL" agrees with a total required fuel amount Tin. It is assumed that the total required fuel amount Tin given by the upstream and downstream injection valves 10 and 10a is taken as "1", and an injection ratio of a fuel supplied from the downstream injection valve 10a in the cylinder 1 to the total required fuel amount Tin (which ratio is referred to as "downstream injection ratio") is taken as "RLU". On such an assumption, an injection ratio of a fuel supplied from the upstream injection valve 10 in the cylinder 1 to the total required fuel amount Tin (which ratio is referred to as "upstream injection ratio") becomes "1-RLU". It is also assumed that a ratio of a fuel directly transferred in the downstream of the throttle valve 9 to a total fuel amount injected from the upstream injection valve 10 (which ratio is referred to as "upstream direct ratio") is taken as "CFW". On such an assumption, a ratio of a fuel adhering on the wall surface in the upstream of the throttle valve 9 to the total fuel amount injected from the upstream injection valve 10 (which ratio is referred to as "adhesion ratio") is defined as an upstream adhesion ratio "1-CFW".

The fuel directly supplied from the upstream injection valve 10 in the downstream of the throttle valve 9 at the upstream direct ratio "CFW" and the fuel having adhered once on the upstream wall surface and then released from the wall surface to be supplied in the downstream are indirectly supplied in the downstream together with a fuel injected from the downstream injection valve 10a. Here, a ratio of a fuel released from the wall surface to be supplied in the downstream to the fuel supplied in the downstream from the upstream injection valve 10 (which is referred to as "release ratio") is defined as an upstream indirect ratio "DFW".

In the downstream of the throttle valve 9, there exist the fuel having flown therein directly or indirectly from the upstream injection valve 10 and a fuel injected from the downstream injection valve 10a. This total fuel amount is defined as a downstream fuel amount TinTH. Of this downstream fuel amount TinTH, a fuel directly transferred in the intake port 3 is calculated by using a downstream direct ratio "AFW", and a fuel adhering on the wall surface in the downstream of the throttle valve 9 is calculated by using an "adhesion ratio" defined as a downstream adhesion ratio "1-AFW".

Further, a fuel having adhered on the upstream wall surface, that is, an upstream adhesion amount is defined as "TWPU", and a fuel having adhered on the downstream wall surface, that is, a downstream adhesion amount is defined as "TWPL". Of the downstream adhesion amount "TWPL", a ratio of a fuel supplied on the intake port 3 side (which is referred to as "release ratio) is defined as a downstream indirect ratio "BFW". A fuel amount calculated on the basis of the downstream direct ratio "AFW" and the downstream indirect ratio "BFW" is the fuel amount "TCYL" supplied to the cylinder 1. Fuel amounts supplied from the upstream and downstream injection valves 10 and 10a are controlled in such a manner that the fuel amount "TCYL" agrees with the required fuel amount.

From the above-described definition, the required fuel amount "TCYL" from the cylinder 1, the downstream adhesion amount "TWPL" used for the next calculation, the upstream adhesion amount "TWPU" used for the next calculation, and the downstream fuel amount "TinTH" are calculated by the following equations:

$$\text{TCYL} = \text{AFW} \times \text{TinTH} + \text{BFW} \times \text{TWPL} \qquad \cdots(\text{Equation 1})$$

$$\text{TWPL} = (1-\text{AFW}) \times \text{TinTH} + (1-\text{BFW}) \times \text{TWPL} \cdots(\text{Equation 2})$$

$$\text{TWPU} = (1-\text{RLU}) \times (1-\text{CFW}) \times \text{Tin(TOTAL)} + (1-\text{CFW}) \times \text{TWPU}$$
$$\cdots(\text{Equation 3})$$

$$\text{TinTH} = \text{Tin(TOTAL)} \times \text{RLU} + \text{CFW} \times (1-\text{RLU}) \times \text{Tin(TOTAL)}$$
$$+ \text{DFW} \times \text{TWPU} \qquad \cdots(\text{Equation 4})$$

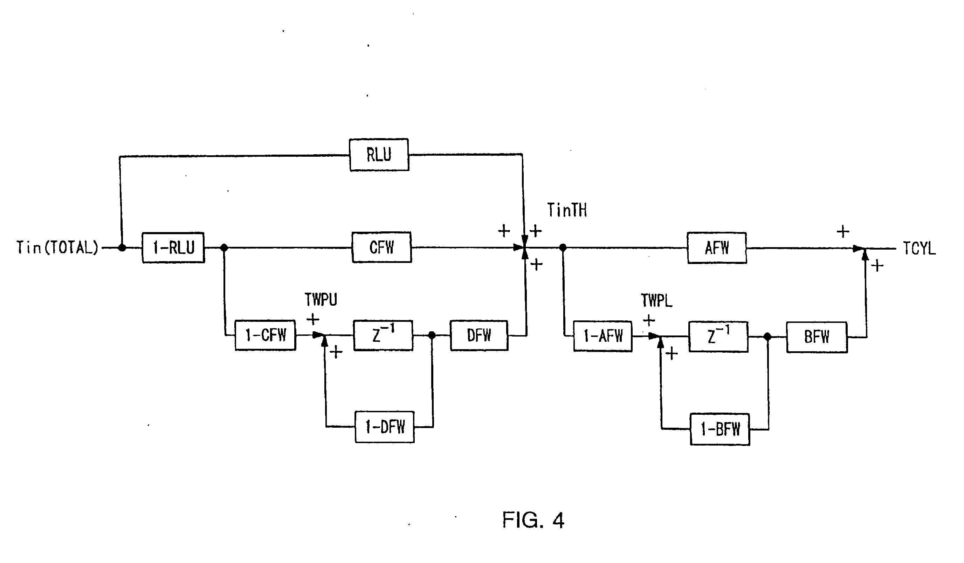

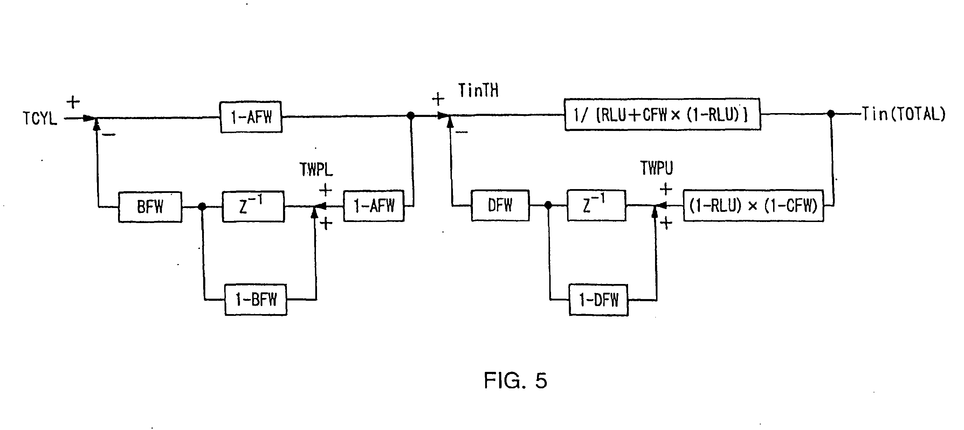

A block diagram corresponding to Equations 1 to 4 is shown in FIG. 4. On the basis of this block diagram shown in FIG. 4, a block diagram indicating a calculation function for calculating the total injection amount Tin(TOTAL) so as to supply the required fuel amount "TCYL" without underflow and overflow can be shown in FIG. 5.

A control model for adding an acceleration correction in order to ensure drivability in a transient state will be described below. In this control model, a required fuel amount containing no acceleration correction is defined as "TCYL (MAP)", and a required fuel amount containing an acceleration correction is defined as "TCYL(TACC)". The required fuel amount TCYL(TACC) is obtained by adding an acceleration correction amount TACC to the required fuel amount TCYL(MAP).

Here, a fuel amount supplied from the upstream injection valve 10 in the cylinder 1 contributes to a fuel injection amount obtained by subtracting a fuel supplied at the downstream injection ratio RLU from the required fuel amount TCYL(MAP) containing no acceleration correction amount. On the other hand, a fuel amount supplied from the downstream injection valve 10a in the cylinder 1 is equivalent to a fuel injection amount obtained by subtracting the above-described contributed fuel amount supplied from the upstream injection valve 10 from the required fuel amount TCYL (TACC) containing an acceleration correction amount.

The fuel amount TinTH(MAP), which must be present in the downstream of the throttle valve 9 to meet the required fuel amount TCYL(MAP) containing no acceleration correction amount, is expressed by the following equation:

$$\mathtt{TinTH(MAP)} = \mathtt{(TCYL(MAP)} - \mathtt{BFW} \times \mathtt{TWPL)/AFW}$$

$$\cdots \mathtt{(Equation\ 5)}$$

The fuel amount TinTH(MAP) has a relationship with the amounts to be injected from the upstream and downstream injection vales 10 and 10a, as expressed by the following equation:

$$\mathtt{TinTH(MAP)} = \mathtt{Tin(TOTAL)} \times \mathtt{RLU} + \mathtt{CFW} \times \mathtt{(1-RLU)} \times$$

$$\mathtt{Tin(TOTAL)} + \mathtt{DFW} \times \mathtt{TWPU} \qquad \cdots \mathtt{(Equation\ 6)}$$

From Equations 5 and 6, the total injection amount Tin(TOTAL) is expressed by the following equation:

$$\mathtt{Tin(TOTAL)} = \mathtt{[(TCYL(MAP)-BFW} \times \mathtt{TWPL)/AFW} - \mathtt{DFW} \times$$

$$\mathtt{TWPU]/[RLU} + \mathtt{(1-RLU)} \times \mathtt{CFW]} \qquad \cdots \mathtt{(Equation\ 7)}$$

From Equation 7, the upstream injection amount Tin(Upper) is expressed by the following equation:

$$\mathtt{Tin(Upper)} = \mathtt{(1-RLU)/[RLU} + \mathtt{(1-RLU)CFW]}$$

$$\mathtt{[(1/AFW)(TCYL(MAP)} - \mathtt{BFW} \times \mathtt{TWPL)} - \mathtt{DFW} \times \mathtt{TWPU]}$$

$$\cdots \mathtt{(Equation\ 8)}$$

The downstream injection amount is calculated as follows. First, the fuel amount TinTH(TACC), which must be present in the downstream of the throttle valve 9 to meet the required fuel amount TCYL(TACC) containing an acceleration correction amount is expressed by the following equation:

$$TinTH(TACC) = (TCYL(TACC) - BFW \times TWPL)/AFW$$

$$\cdots (Equation \ 9)$$

Of the fuel present in the upstream of the throttle valve 9, the amount TinTH(Upper) of a fuel flowing in the downstream of the throttle valve 9 is expressed by the following equation:

$$TinTH(Upper) = CFW \times Tin(Upper) + DFW \times TWPU$$

$$\cdots (Equation \ 10)$$

From Equations 9 and 10, the downstream injection amount Tin(Lower) is expressed by the following equation:

$$Tin(Lower) = TinTH(TACC) - TinTH(Upper) = (TCYL(MAP)$$

$$- BFW \times TWPL)/AFW - (CFW \times Tin(Upper) + DFW \times TWPU)$$

$$\cdots (Equation \ 11)$$

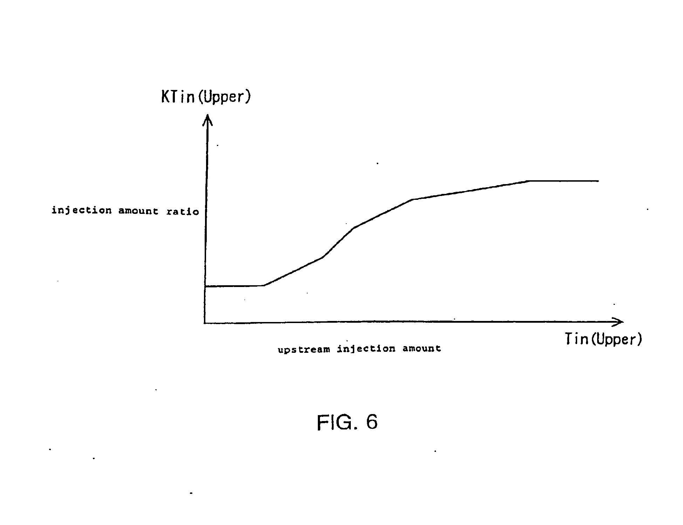

If the injection amount to be injected from the upstream injection valve 10 per unit time is different from that to be injected from the downstream injection valve 10a per unit time, then a ratio of the fuel injection amount to be injected from the upstream injection valve 10 to the fuel injection amount to be injected from the downstream injection valve 10a is previously set, and a fuel injection time for each of the upstream and downstream injection valves 10 and 10a is calculated in accordance with the fuel injection ratio. A fuel injection amount ratio KTin(Upper) can be tabled as a function of the upstream injection amount Tin(Upper). One example of a relationship between the fuel injection amount ratio KTin (Upper) and the upstream injection amount Tin(Upper) is shown in FIG. 6.
An injection time Tout(Upper) of the upstream injection valve 10 is calculated by the following equation:

$$Tout(Upper) = Tin(Upper) \times KTin(Upper) + TiVB(Upper)$$

$$\cdots (Equation \ 12)$$

In this equation, TiVB(Upper) designates an unavailable injection time of the upstream injection valve 10.
An injection time Tout(Lower) of the downstream injection valve 10a is calculated by the following equation:

$$Tout(Lower) = Tin(Lower) + TiVB(Lower)$$

$$\cdots (Equation \ 13)$$

In this equation, TiVB(Lower) designates an unavailable injection time of the downstream injection valve 10a.
Of the fuel having adhered on the upstream wall surface (upstream adhesion amount TWPU) and the fuel having adhered on the downstream wall surface (downstream adhesion amount TWPL), the downstream adhesion amount TWPL and the upstream adhesion amount TWPU used for the next cycle are calculated in consideration of fuels carried away by this cycle and fuels newly adhered by this cycle.
First, from Equation 2, the downstream adhesion amount TWPL left as adhered for the next cycle is calculated by the following equation:

$$\text{Next time TWPL} = (1-RLU) \times TinTH(TACC) + (1-BFW) \times$$

$$\text{TWPL} \qquad\qquad \cdots(\text{Equation 14})$$

Since the injection by the upstream injection valve 10 contains no acceleration correction amount, the upstream adhesion amount TWPU left as adhered for the next cycle is calculated from Equation 3 as follows;

$$\text{Next time TWPU} = (1-RLU) \times (1-CFW) \times Tin(TOTAL) +$$

$$(1-CFW) \times TWPU \qquad\qquad \cdots(\text{Equation 15})$$

In the case of carrying out the fuel injection control on the basis of the above-described control model, it may be preferred to supply a fuel in accordance with a rapid change in engine state, for example, a large change in throttle opening angle. For this reason, according to this embodiment, a state in which a fuel injected from the upstream injection valve 10 flows in the downstream of the throttle valve 9 is monitored at each crank angle of 90° , and a lack of the fuel is corrected by the downstream injection valve 10a in accordance with the current engine state.

As described above, a fuel flowing in the downstream of the throttle valve 9 includes a fuel injected from the upstream injection valve 10 to directly flow in the downstream of the throttle valve 9 and a fuel released from the wall surface to indirectly flow in the downstream of the throttle valve 9. The direct flow-in fuel flows in the downstream of the throttle valve 9 during a fuel injection period, and the indirect flow-in fuel flows in the downstream of the throttle valve 9 in an intake stroke in which an intake negative pressure occurs.

If a throttle opening angle is changed during one cycle, then the suction state is correspondingly changed, with a result that the amount of fuel flowing from the upstream into the downstream of the throttle valve 9 is changed. Accordingly, a fuel flowing from the upstream into the downstream of the throttle valve 9 during one cycle is estimated on the basis of the direct flow-in fuel and the indirect flow-in fuel, which flow from the upstream into the downstream of the throttle valve 9 and which are detected at each crank angle of 90°. As a result, if the total of the direct flow-in fuel and the indirect flow-in fuel cannot meet the required fuel amount for each cylinder, then the lack of the fuel is injected from the downstream injection valve 10a, to be thus corrected.

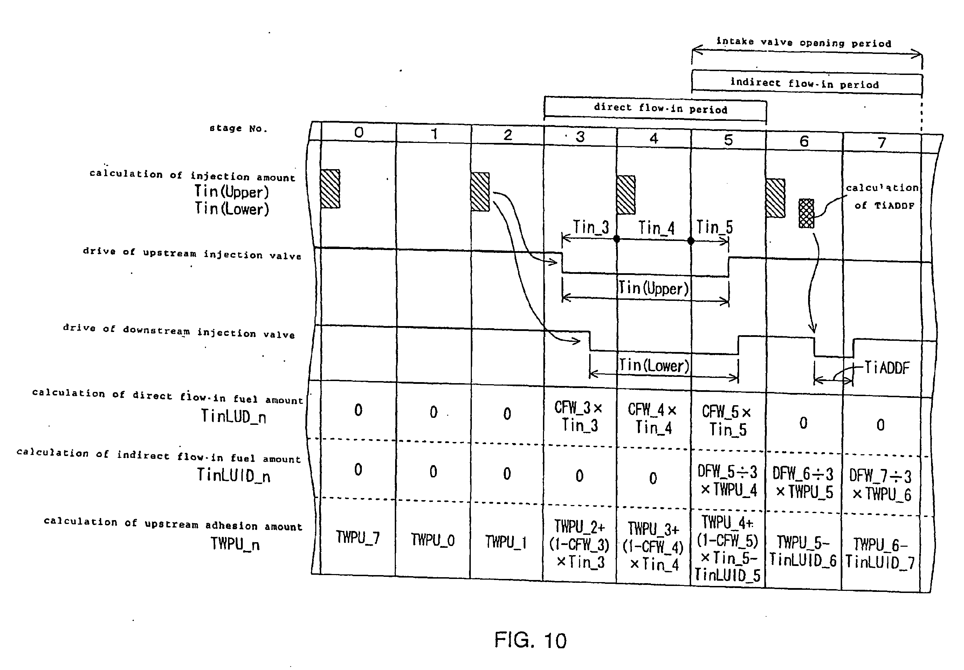

FIG. 10 is a timing chart of the control model according to this embodiment. As shown in this figure, one cycle (crank angle: 720° ) of the engine is divided into eight stages, so that the control is performed on the basis of the eight stages of one cycle. The injection amount Tin(Upper) of the upstream injection valve 10 and the injection amount Tin (Lower) of the downstream injection valve 10a are calculated at each crank angle of 180° . On the basis of such a calculation result, fuel injection by each of the upstream and downstream injection valves 10 and 10a is performed one per one cycle.

In actual, of results of calculation of fuel injection amounts, performed by a plurality of times during one cycle, one corresponding to the optimum injection timing is adopted in consideration of a calculated injection time and the like. In the example shown in the figure, the result of calculation performed in the stage 2 is adopted, and in the next stage 3, fuel injection by each of the upstream and downstream injection valves 10 and 10a is started. The fuel injection is ended in the stage 5.

Of the fuel injected from the upstream injection valve 10, the direct flow-in fuel flows in the downstream of the throttle valve 9 within the fuel injection time, that is, in a period from the stage 3 to the stage 5 (this period is referred to as "direct flow-in period"), and the indirect flow-in fuel flows in the downstream of the throttle valve 9 in the intake stroke, that is, in a period from the stage 5 to the stage 7 (this period is referred to as "indirect flow-in period").

The direct flow-in fuel and the indirect flow-in fuel are calculated for each stage. A fuel amount (direct flow-in amount) due to the direct flow-in fuel is defined by TinLUD_n, and a fuel amount (indirect flow-in amount) due to the indirect flow-in fuel is defined by TinLUID_n, and are respectively expressed by the following equations:

$$\text{TinLUD\_n} = CFW\_n \times Tin\_n \qquad\qquad \cdots(\text{Equation 16})$$

$$\text{TinLUID\_n} = \text{DFW\_n}/(\text{number of indirect flow-in}$$

$$\text{stage}) \times \text{TWPU\_n-1} \qquad \cdots(\text{Equation 17})$$

In these equations, character "n" designates a stage number (the same is true for in the following equations).

A time required for a fuel injected from the upstream injection valve 10 to reach the intake valve 5 is longer than a time required for a fuel injected from the downstream injection valve 10a to reach the intake valve 5. According to this embodiment, an amount of a fuel having passed through the throttle valve 9 in one cycle from the stage 6 in which fuel injection from the upstream injection valve 10 was ended to the next stage 5 is calculated as an amount of a fuel flowing from the upstream of the throttle valve 9 in the cylinder 1 in the intake stroke. Since the fuel amount injected from the upstream injection valve 10 in the stage 6 can be calculated, a lack of the fuel in the stage 6 can be calculated. On the other hand, a fuel amount injected from the downstream injection valve 10a in one cycle from the stage 0 after the stage 6, in which fuel injection from the downstream injection valve 10a was ended, by two stages to the stage 7 is calculated.

Consequently, the fuel (upstream fuel TinLU) passing through the throttle valve 9 in one cycle is estimated as a total of the direct flow-in amount TinLUD_ n (n = 6~5) and the indirect flow-in amount TinLUID_n (n = 6~5) in a period from the stage 6 to the stage 5.

The calculation of a fuel amount required for the cylinder 1 is preferred to be performed in the intake stroke or immediately before the intake stroke. This is because if a time from calculation to fuel injection is long, then the control cannot cope with a rapid change in engine state. Accordingly, on the basis of the result of calculation in the vicinity of the intake stroke, that is, the result of calculation of the required fuel amount in the stage 6, a lack of the fuel supplied amount by the upstream injection valve 10 in one cycle is decided, and an additional injection from the downstream injection valve 10a is performed in accordance with the decided lack of the fuel amount. An additional injection amount TiADDF is calculated by the following equation:

$$\text{TiADDF} = \text{TinTH(TACC)} - \text{TinLU} - \text{Tin(Lower)} =$$

$$(\text{TCYL(TACC)} - \text{BFW} \times \text{TWPL})/\text{AFW} - \text{TinLU} - \text{Tin(Lower)}$$

$$\cdots(\text{Equation 18})$$

A fuel adhesion amount on the inner wall of the intake passage 8 in each of the upstream and the downstream of the throttle valve 9 for the next cycle is calculated by the following equation:

$$\text{TWPU} = \text{TWPU\_5} \qquad \cdots(\text{Equation 19})$$

$$\text{TWPL} = (1\text{-AFW}) \times \text{TinTH(TACC)} + (1\text{-BFW}) \times \text{TWPL}$$

$$\cdots(\text{Equation 20})$$

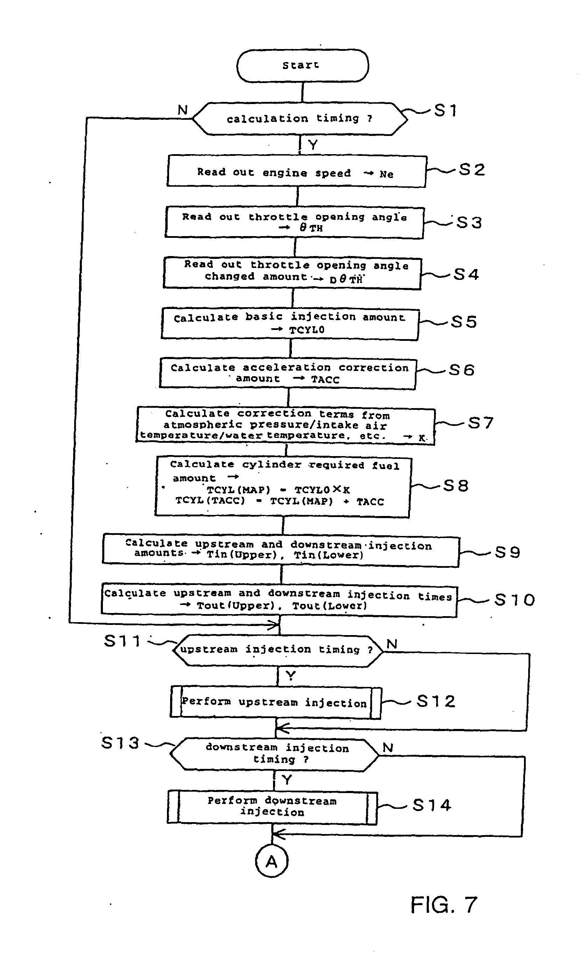

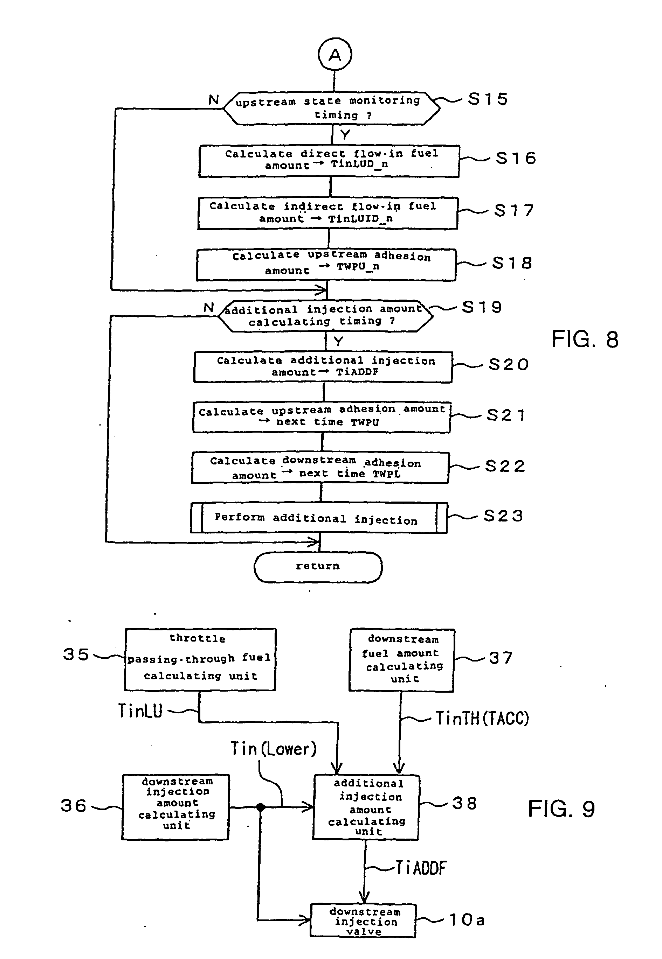

The fuel injection control on the basis of the above-described control model will be described with reference to flow charts shown in FIGS. 7 and 8.

In step S1 shown in FIG. 7, it is decided whether or not the present time is a predetermined calculation timing. This decision is performed by a position of the crankshaft detected on the basis of detection signals from the crank angle sensor 19 and the cam angle sensor 25. As described above, the calculation timing comes at each crank angle of 180°. If it is decided that the present time is the calculating timing, the process goes on to step S2 in which the engine speed Ne is read out. The engine speed Ne is detected on the basis of a detection signal from the crank angle sensor 19. In step S3, the throttle opening angle θ TH is read out. In step S4, a changed amount DθTH from the throttle opening angle θTH in the previous calculation timing to the throttle opening angle θTH in this calculation timing is calculated.

In step S5, a basic injection amount TCYL0 is calculated. The basic injection amount TCYL0 is calculated on the basis of the engine speed Ne and the throttle opening angle θTH. In step S6, an acceleration correction amount TACC is calculated on the basis of the throttle opening angle changed amount DθTH. The basic injection amount TACYL0 can be obtained by retrieving a table in which a relationship among the basic injection amount TCYL0, the engine speed Ne, and the throttle opening angle θTH is previously set on the basis of experimental results and calculation results. Similarly, the acceleration correction amount TACC can be obtained by retrieving a table in which a relationship between the throttle opening angle changed amount DθTH and the acceleration correction amount is previously set on the basis of experimental results and calculation results.

In step S7, correction terms are calculated on the basis of the atmospheric pressure sensor 26, the intake air temperature sensor 15, the water temperature sensor 22, and the like, and a correction coefficient K is calculated on the basis of these correction terms.

In step S8, the required fuel amount TCYL(MAP) containing no acceleration correction amount TACC and the required fuel amount TCYL(TACC) containing the acceleration correction amount TACC are calculated. The required fuel amount TCYL(MAP) is calculated by multiplying the basic injection amount TCYL0 by the correction coefficient K. The required fuel amount TCYL(TACC) is calculated by adding the acceleration correction amount TACC to the fuel supplied amount TCYL(MAP) containing no acceleration correction amount.

In step S9, the upstream injection amount Tin(Upper) and the downstream injection amount Tin(Lower) are calculated. These amount are calculated on the basis of Equations 8 and 11.

In step S10, the upstream side fuel injection time required for supplying the upstream injection amount Tin(Upper) and the downstream side fuel injection time required for supplying the downstream injection amount Tin(Lower) are calculated. Since the injection amount per unit time by the upstream injection valve 10 is generally different from that by the downstream injection valve 10a, in step S10, the fuel injection amount Tout(Upper) is calculated on the basis of Equation 12, and the fuel injection time Tout(Lower) is calculated on the basis of Equation 13.

In step S11, it is decided whether or not the present time is the injection timing of the upstream injection valve 10, and if YES, the process goes on to step S12 in which the upstream injection valve 10 is driven for the time calculated in step S10.

In step S13, it is decided whether or not the present time is the injection timing of the downstream injection valve 10a, and if YES, the process goes on to step S14 in which the downstream injection valve 10a is driven for the time calculated in step S10.

In step S15 shown in FIG. 8, it is decided whether or not the present time is the upstream state monitoring timing. The upstream state monitoring timing is a timing set at each crank angle of 90° and is a timing at which a fuel passing through the throttle valve 9 is calculated. If the answer in step S15 is affirmative (YES), the process goes on to step S16 in which the direct flow-in amount TinLUD_n is calculated on the basis of Equation 16. In step S17, the indirect flow-in amount TinLUID_n is calculated on the basis of Equation 17. In step S18, an amount of a fuel adhered on the upstream wall surface by the present fuel injection, that is, the upstream adhesion amount TWPU_n is calculated, and is stored for calculation at the next upstream state monitoring timing.

In step S19, it is decided whether or not the present time is the additional injection amount calculating timing. In step S20, the additional injection amount TiADDF is calculated on the basis of Equation 18. In step S21, an amount of a fuel adhered on the upstream wall surface by the present fuel injection, that is, the upstream adhesion amount TWPU is calculated on the basis of Equation 19 and is stored for calculation at the next time (after an elapse of a crank angle of 180° ). In step S22, an amount of a fuel adhered on the downstream wall surface by the present fuel injection, that is, the downstream adhesion amount TWPL is calculated on the basis of Equation 20 and is stored for calculation at the next time (after an elapse of a crank angle of 180° ). In step S23, a lack of the fuel is injected from the downstream injection valve 10a on the basis of the calculation in step S20.

A fuel required for the cylinder 1 (cylinder required fuel) determined in consideration of drivability and fuel consumption can be supplied by executing the above-described process for each cycle. It is to be noted that if the engine has a plurality of cylinders, the process may be executed for each cylinder.

Depending on a difference between environments in which the upstream and downstream injection valves 10 and 10a are disposed, a fuel pressure of the upstream injection valve 10 against a surrounding atmosphere may be different from that of the downstream injection valve 10a against the surrounding atmosphere. For example, a fuel pressure of the upstream injection valve 10 may be lower than that of the downstream injection valve 10a. In this case, more accurate fuel supply against the cylinder required fuel amount can be carried out by performing, in addition to the above-described control, correction in consideration of the difference in fuel pressure. To be more specific, sensors for detecting fuel pressures of the upstream and downstream injection valves 10 and 10a are provided, whereby the injection times of the upstream and downstream injection valves 10 and 10a are corrected in accordance with outputs from the sensors. For example, the correction may be performed in such a manner that the injection time of the injection valve having a higher fuel pressure is set to be made shorter than the injection time of the injection valve having a lower fuel pressure.

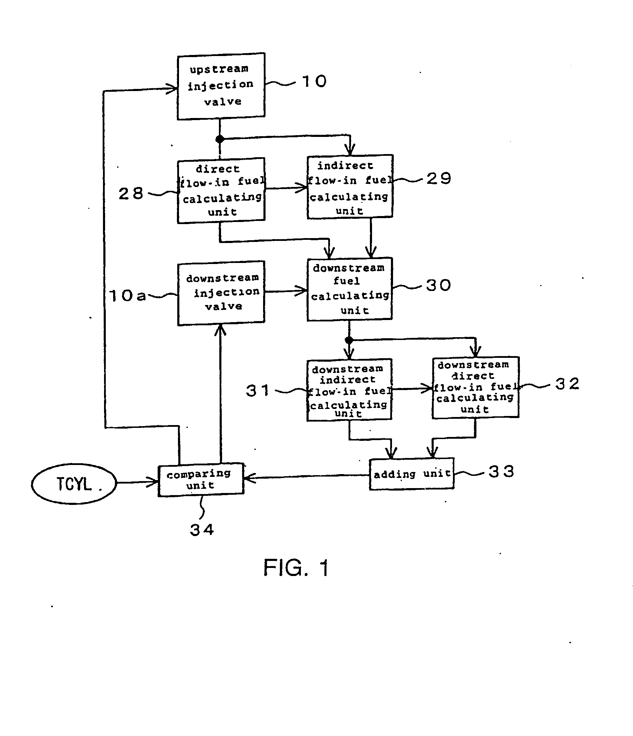

FIG. 1 is a block diagram showing functions of essential portions of a fuel injection control system according to this embodiment. In this figure, a direct flow-in fuel calculating unit 28 estimates part of a fuel injected from the upstream injection valve 10, which part of a fuel does not adhere on the inner wall of the intake pipe and directly flows in the downstream of the throttle valve 9. An indirect flow-in fuel calculating unit 29 estimates part of the fuel injected from the upstream injection valve 10, which part of the fuel has adhered on the inner wall of the intake pipe and is released therefrom to indirectly flow in the downstream of the throttle valve 9.

A downstream fuel calculating unit 30 calculates a total of the estimated fuel amounts calculated by the direct flow-in fuel calculating unit 28 and the indirect flow-in fuel calculating unit 29 and a fuel amount injected from the downstream injection valve 10a. A downstream indirect flow-in fuel calculating unit 31 estimates part of the total fuel calculated by the downstream fuel calculating unit 30, which part of the total fuel has adhered on the inner wall of the intake pipe and is released therefrom to indirectly flow in the cylinder 1.

A downstream direct flow-in fuel calculating unit 32 estimates part of the total fuel calculated by the downstream fuel calculating unit 30, which part of the total fuel is obtained by subtracting the indirect flow-in fuel calculated by the downstream indirect flow-in fuel calculating unit 31 from the total fuel, and which part of the total fuel directly flows in the cylinder 1.

An adding unit 33 adds the fuel amounts calculated by the downstream direct flow-in fuel calculating unit 32 and the downstream indirect flow-in fuel calculating unit 31. A comparing unit 34 compares the result calculated by the adding unit 33, that is, the total of the fuel estimated to flow in the cylinder 1 with a cylinder required fuel amount TCYL. If the required fuel amount TCYL is smaller, then the comparing unit 34 outputs an instruction to make the fuel injection times of the upstream and downstream injection valves 10 and 10a shorter, while if the required fuel amount TCYL is larger, then the comparing unit 34 outputs an instruction to make the fuel injection times of the upstream and downstream injection valves 10 and 10a longer.

FIG. 9 is a block diagram showing a function of calculation of an additional injection amount. In this figure, a throttle passing-through fuel calculating unit 35 calculates the fuel amount TinLU passing through the throttle valve 9 during the intake stroke, that is, the total of the direct flow-in amount TinLUD_n (n = 6~5) and the indirect flow-in amount TinLUID_n (n = 6~5) in the period from the stage 6 to the stage 5 on the basis of Equations 16 and 17. A downstream injection amount calculating unit 36 calculates the fuel injection amount Tin(Lower) of the downstream injection valve 10a by the function shown in FIG. 1. A downstream fuel amount calculating unit 37 calculates the downstream fuel amount TinTH(TACC) by using the required fuel amount TCYL(TACC), the downstream direct ratio AFW and the downstream indirect ratio BFW, and the downstream adhesion amount TWPL on the basis of Equation 9. An additional injection amount calculating unit 38 calculates the additional injection amount TiADDF by using the throttle passing-through fuel amount TinLU, the downstream fuel amount TinTH(TACC), and the fuel injection amount Tin(Lower) by the downstream injection valve 10a on the basis of Equation 18.

According to this embodiment, the fuel injection amounts by the upstream and downstream injection valves 10 and 10a are calculated in consideration of part a fuel injected from the upstream injection valve 10, which part of a fuel has been adhered on the inner wall of the intake pipe in the downstream of the throttle valve 9 and is released therefrom. However, the fuel injection amounts by the upstream and downstream injection valves 10 and 10a may be calculated not in consideration of part a fuel injected from the upstream injection valve 10, which part of a fuel has been adhered on the inner wall of the intake pipe in the downstream of the throttle valve 9, but in respective consideration of part of a fuel injected from the upstream injection valve 10, which part of a fuel has adhered on the inner wall in the upstream of the throttle valve 9, the fuel released therefrom, part of a fuel injected from the downstream injection valve 10a, which part of a fuel has adhered on the inner wall in the downstream of the throttle valve 9, and the fuel released therefrom.

To be more specific, part of a fuel injected from the upstream injection valve 10, which part of a fuel directly flows in the engine, and part of the fuel injected from the upstream injection valve 10, which part of the fuel has been deposited on the inner wall of the intake pipe in the upstream of the throttle valve 9 and is released to indirectly flow in the engine are added, and the added amount is taken as a first fuel amount. On the other hand, part of a fuel injected from the downstream injection valve 10a, which part of a fuel directly flows in the engine, and part of the fuel injected from the downstream injection valve 10a, which part of the fuel has been deposited on the inner wall of the intake pipe in the downstream of the throttle valve 9 and is released to indirectly flow in the engine are added, and the added amount is taken as a second fuel amount. The fuel injection amounts of the upstream and downstream injection valves 10 and 10a are determined in such a manner that the total of the first and second fuel amounts meets the engine required fuel amount, that is, the cylinder required fuel amount TCYL.

Although one fuel injection valve is provided in each of the upstream and downstream of the throttle valve 9 in this embodiment, the present invention is not limited thereto, but can be suitably used for an engine in which at least one fuel injection valve is provided in each of the upstream and downstream of the throttle valve 9.

In this embodiment, the direct flow-in amount and the indirect flow-in amount of fuels injected from a plurality of fuel injection valves are estimated and an additional fuel injection amount is determined on the basis of the estimated result; however, a lack of a fuel is calculated for each of the plurality of fuel injection valves, and a fuel injection amount by each of the fuel injection amounts may be determined. In summary, according to this embodiment, the fuel injection control may be configured such that part of a fuel injected from a fuel injection valve, which part of a fuel has adhered on the inner wall of an intake pipe and is released therefrom, is estimated in accordance with an adhesion ratio and a release ratio, and it is determined, on the basis of not a value estimated fixedly but a value estimated each time, how much the fuel injected from the fuel injection valve flows in the cylinder in the intake stroke, and a lack of the fuel is added.

The invention can be summarized as follows:

To additionally inject, in an engine transient state, a lack of a fuel supply amount on the basis of a current engine state and hence to improve drivability and fuel consumption.

A required fuel amount is calculated at a predetermined calculation cycle, and a fuel injection amount Tin (Upper) to be injected from an upstream injection valve and a fuel injection amount Tin(Lower) to be injected from a downstream injection valve are calculated. After fuel injection on the basis of the calculated fuel injection amounts, a lack TiADDF of the fuel injection amounts immediately before re-calculation of a required fuel amount at the calculation cycle coming until the end of an intake stroke (end of an intake valve opening period) by subtracting the fuel injection amounts from the re-calculated required fuel amount. The calculated lack TiADDF is injected from the downstream injection valve during the intake stroke (in stages 6 and 7). Part of a fuel injected from each of the fuel injection valves, which part has adhered on an inner wall of an intake pipe and is released to be supplied in an engine, is calculated in accordance with a predetermined adhesion ratio and a predetermined release ratio, and the above lack TiADDF is determined in consideration of the calculated part of the fuel.

**Claims**

1. A fuel injection control system for an engine including at least one upstream injection valve (10) disposed in the upstream of a throttle valve (9) and at least one downstream injection valve (10a) disposed in the downstream of the throttle valve (9), comprising:

   first means (24) for calculating a required fuel amount (Tin) at a predetermined calculation cycle, and calculating first fuel amounts (Tin (upper), Tin (lower)) to be injected from the upstream injection valve (10) and the downstream injection valve (10a) on the basis of the required fuel amount;
   **characterized by**
   second means for calculating, after injections of fuels from the upstream injection valve(10) and the downstream injection valve (10a) on the basis of the calculated first fuel injection amounts (Tin (upper), Tin (lower)), a lack (TiADDF) of the fuel injection amounts immediately before re-calculation of a required fuel amount at the calculation cycle coming until the end of an intake stroke by subtracting the fuel injection amounts from the re-calculated required fuel amount, wherein said second means comprises:

   third calculating means for adding first part (CF) of a fuel injected from the upstream injection valve (10), which part (CFW) flows in the downstream of the throttle valve (9), second part (DFW) of the fuel injected from the upstream injection valve (10), which second part (DFW) has been deposited on the inner wall of the intake pipe (9) in the upstream of the throttle valve (9) and is released therefrom to flow in the downstream of the throttle valve (9), and a fuel injected from the downstream injection valve (10a), and subtracting a fuel (TWPL) adhering on the inner wall of the intake pipe (9) in the downstream of the throttle valve (9) from the added fuel amount calculated by the third calculating means; and
   fourth calculating means for adding the fuel amount calculated by said third calculating means, and part (BFW) of the fuel deposited on the inner wall of the intake pipe (9) in the downstream of the throttle valve (9), which part (BFW) flows on the engine side;
   wherein a difference obtained by subtracting the fuel amount calculated by said fourth calculating means from the required fuel amount (Tin) is taken as the lack (TiADDF) of the fuel injection amounts,
   wherein the lack (TiADDF) of the fuel injection amounts is injected from the downstream injection valve (10a) during the intake stroke.

**Patentansprüche**

1. Kraftstoffeinspritz-Steuerungssystem für einen Motor, enthaltend zumindest ein stromaufwärtiges Einspritzventil (10), das stromaufwärts eines Drosselventils (9) angeordnet ist, und zumindest ein stromabwärtiges Einspritzventil (10a), das stromabwärts des Drosselventils (9) angeordnet ist, umfassend:

ein erstes Mittel (24) zum Berechnen einer erforderlichen Kraftstoffmenge (Tin) mit einem vorbestimmten Berechnungszyklus, und Berechnen von ersten Kraftstoffmengen (Tin (upper), Tin (lower)) zur Einspritzung von dem stromaufwärtigen Einspritzventil (10) und dem stromabwärtigen Einspritzventil (10a) auf der Basis der angeforderten Kraftstoffmenge;

**gekennzeichnet durch**

ein zweites Mittel zum Berechnen, nach Kraftstoffeinspritzungen von dem stromaufwärtigen Einspritzventil (10a) und dem stromabwärtigen Einspritzventil (10a) auf der Basis der berechneten ersten Kraftstoffeinspritzmengen (Tin (upper, Tin (lower)), einer Fehlmenge (TiADDF) der Kraftstoffeinspritzmengen unmittelbar vor Nachberechnung einer angeforderten Kraftstoffmenge beim kommenden Berechnungszyklus bis zum Ende eines Ansaugtakts durch Subtrahieren der Kraftstoffeinspritzmengen von der nachberechneten angeforderten Kraftstoffmenge, worin das zweite Mittel umfasst:

ein drittes Berechnungsmittel zum Addieren eines ersten Teils (CF) eines vom stromaufwärtigen Einspritzventil (10) eingespritzten Kraftstoffs, welches Teil (CFW) stromabwärts des Drosselventils (9) fließt, eines zweiten Teils (DFW) des vom stromaufwärtigen Einspritzventil (10) eingespritzten Kraftstoffs, welches zweite Teil (DFW) auf der Innenwand des Ansaugrohrs stromaufwärts des Drosselventils (9) abgelagert wurde und davon gelöst wird, so dass er stromabwärts des Drosselventils (9) fließt, und eines vom stromabwärtigen Einspritzventil (10a) eingespritzten Kraftstoffs, und Subtrahieren eines Kraftstoffs (TWPL), der an der Innenwand des Ansaugrohrs (9) stromabwärts des Drosselventils (9) anhaftet, von der vom dritten Berechnungsmittel berechneten addierten Kraftstoffmenge; und

ein viertes Berechnungsmittel zum Addieren der vom dritten Berechnungsmittel berechneten Kraftstoffmenge und eines Teils (BFW) des Kraftstoffs, der sich an der Innenwand des Ansaugrohrs (9) stromabwärts des Drosselventils (9) abgelagert hat, welches Teil (BFW) an der Motorseite fließt;

worin eine Differenz, die **durch** Subtrahieren der vom vierten Berechnungsmittel berechneten Kraftstoffmenge von der angeforderten Kraftstoffmenge (Tin) erhalten wird, als die Fehlmenge (TiADDF) der Kraftstoffeinspritzmengen genommen wird,

worin die Fehlmenge (TiADDF) der Kraftstoffeinspritzmengen während des Ansaugtakts vom stromabwärtigen Einspritzventil (10a) eingespritzt wird.

## Revendications

1. Système de commande d'injection de carburant pour un moteur comprenant au moins une soupape d'injection en amont (10) disposée dans la partie amont d'un papillon des gaz (9) et au moins une soupape d'injection en aval (10a) disposée dans la partie aval du papillon des gaz (9), comprenant :

des premiers moyens (24) pour calculer une quantité de carburant requise (Tin) à un cycle de calcul prédéterminé, et calculer des premières quantités de carburant (Tin (upper), Tin (lower)) à injecter à partir de la soupape d'injection en amont (10) et de la soupape d'injection en aval (10a) en fonction de la quantité de carburant requise ;

**caractérisé par** :

des deuxièmes moyens pour calculer, après les injections de carburant de la soupape d'injection en amont (10) et la soupape d'injection en aval (10a) en fonction des premières quantités d'injection de carburant (Tin (upper), tin (lower)) calculées, un manque (TiADDF) des quantités d'injection de carburant immédiatement avant un nouveau calcul d'une quantité de carburant requise au cycle de calcul se produisant jusqu'à la fin d'une course d'admission en soustrayant les quantités d'injection de carburant de la quantité de carburant requise recalculée, dans lequel lesdits deuxièmes moyens comprennent :

des troisièmes moyens de calcul pour ajouter une première partie (CF) d'un carburant injecté à partir de la soupape d'injection en amont (10), laquelle partie (CFW) s'écoule dans la partie aval du papillon des gaz (9), une seconde partie (DFW) du carburant injecté à partir de la soupape d'injection en amont (10), laquelle seconde partie (DFW) a été déposée sur la paroi interne du tuyau d'admission (9) dans la partie amont du papillon des gaz (9) et est libérée de celle-ci pour s'écouler dans la partie aval du papillon des gaz (9), et un carburant injecté à partir de la soupape d'injection en aval (10a), et soustrayant un carburant (TWPL) adhérant sur la paroi interne du tuyau d'admission (9) dans la partie aval du papillon des gaz (9) de la quantité de carburant ajoutée, calculée par les troisièmes moyens de calcul ; et des quatrièmes moyens de calcul pour ajouter la quantité de carburant calculée par lesdits troisièmes moyens de calcul, et une partie (BFW) du carburant déposé sur la paroi interne du tuyau d'admission (9) dans la partie aval du papillon des gaz (9), laquelle partie (BFW) s'écoule sur le côté du moteur ;

dans lequel une différence obtenue en soustrayant la quantité de carburant calculée par lesdits quatrièmes moyens de calcul de la quantité de carburant requise (Tin) est prise en tant que manque (TiADDF) des quantités d'injection de carburant,

dans lequel le manque (TiADDF) des quantités d'injection de carburant est injecté à partir de la soupape d'injection en aval (10a) pendant la course d'admission.

FIG. 1

intake air temperature signal

15

13

26

14

10

61

51 8

7

9

11

23

θTH

25

12

negative
pressure signal

control

5

injection signal

unit

6

water temperature
signal

4

3

10a

2

22

24

1

16

17

vehicle speed
signal

21

19

20

crank pulse

cam pulse

18

FIG. 2

16

FIG. 3

FIG. 4

FIG. 5

KTin (Upper)

injection amount ratio

upstream injection amount

Tin (Upper)

FIG. 6

FIG. 7

FIG. 8

FIG. 9

EP 1 260 695 B1

| stage No. | 0 | 1 | 2 | 3 | 4 | 5 | 6 | 7 |
|---|---|---|---|---|---|---|---|---|
| | | | | direct flow-in period | | | indirect flow-in period | intake valve opening period |
| calculation of injection amount Tin(Upper) Tin(Lower) | ▨ | | ▨ | ▨ Tin_3 | Tin_4 | Tin_5 | ▨ | ▨ calculation of TiADDF |
| drive of upstream injection valve | | | | | Tin(Upper) | | | |
| drive of downstream injection valve | | | | Tin(Lower) | | | | TiADDF |
| calculation of direct flow-in fuel amount TinLUD_n | 0 | 0 | 0 | $CFW\_3 \times Tin\_3$ | $CFW\_4 \times Tin\_4$ | $CFW\_5 \times Tin\_5$ | 0 | 0 |
| calculation of indirect flow-in fuel amount TinLUID_n | 0 | 0 | 0 | 0 | 0 | $DFW\_5 \div 3 \times TWPU\_4$ | $DFW\_6 \div 3 \times TWPU\_5$ | $DFW\_7 \div 3 \times TWPU\_6$ |
| calculation of upstream adhesion amount TWPU_n | TWPU_7 | TWPU_0 | TWPU_1 | $TWPU\_2 + (1-CFW\_3) \times Tin\_3$ | $TWPU\_3 + (1-CFW\_4) \times Tin\_4$ | $TWPU\_4 + (1-CFW\_5) \times Tin\_5 - TinLUID\_5$ | $TWPU\_5 - TinLUID\_6$ | $TWPU\_6 - TinLUID\_7$ |

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6102999 A
- JP 7247892 A
- JP 5340285 A
- JP 63147953 A
- US 4424785 A
- EP 0676543 A2
- US 5404856 A
- US 576054 A
- US 5584277 A
- US 5819714 A
- US 5642722 A
- EP 0676539 A
- US 5762054 A